# EUROPÄISCHE PATENTSCHRIFT

(11) **EP 2 655 496 B1**
(45) Veröffentlichungstag und Bekanntmachung des Hinweises auf die Patenterteilung: **20.05.2015**
(21) Anmeldenummer: 11802067.6
(22) Anmeldetag: 19.12.2011
(51) Int. Cl.: C08K 3/04, C08K 5/00, C08K 7/24

(54) **THERMOPLASTISCHE FORMMASSE**
THERMOPLASTIC MOLDING COMPOSITION
MATIÈRE À MOULER THERMOPLASTIQUE

(30) Priorität: 21.12.2010 EP 10196319
(43) Veröffentlichungstag der Anmeldung: 30.10.2013
(73) Patentinhaber: BASF SE, 67056 Ludwigshafen (DE)
(72) Erfinder: GIBON, Cécile, 68159 Mannheim (DE); YANG, Xin, 64625 Bensheim (DE); KUJAT, Christof, 67434 Neustadt (DE); WEBER, Martin, 67487 Maikammer (DE); SZARVAS, Laszlo, 67071 Ludwigshafen (DE); KLEIN, Daniel, 68163 Mannheim (DE); POETSCHKE, Petra, 01309 Dresden (DE); KRAUSE, Beate, 01662 Meißen (DE)
(86) Internationale Anmeldenummer: PCT/EP2011/073181
(87) Internationale Veröffentlichungsnummer: WO 2012/084776

(56) Entgegenhaltungen:
- DATABASE WPI Week 201110 Thomson Scientific, London, GB; AN 2010-Q67112 XP002648250, & KR 2010 130 368 A (JANG K S) 13. Dezember 2010 (2010-12-13)

## Beschreibung

Die Erfindung betrifft eine thermoplastische Formmasse, die neben Polyamid und Kohlenstoff-Nanoröhren, Graphenen oder Gemischen davon zusätzlich ionische Flüssigkeiten enthält.

Der Einsatz von Kohlenstoff-Nanoröhren in speziellen Kunststoffen in Kombination mit ionischen Flüssigkeiten ist an sich bekannt.

Die WO 2008/006422 betrifft die Verwendung von ionischen Flüssigkeiten oder Lösungen aus Metallsalzen in ionischen Flüssigkeiten als Antistatika für Kunststoffe. Die Kunststoffe sind dabei insbesondere Polyurethane. Hinweise auf andere einsetzbare Kunststoffe sind nicht vorhanden.

Die JP-A-2009-155436 betrifft Kohlenstoffnanoröhren-Dispersionen und Harzverbindungen sowie Harzformkörper, die Kohlenstoffnanoröhren-Dispersionen enthalten. Die Kohlenstoffnanoröhren werden zunächst mit Silan-basierten oberflächenaktiven Substanzen umgesetzt, die eine verbesserte Anbindung an das Polymerharz erlauben sollen. Zudem werden die Silan-basierten oberflächenaktiven Substanzen gemeinsam mit einer ionischen Flüssigkeit eingesetzt. Der Anteil der ionischen Flüssigkeit beträgt dabei gemäß der Beispiele etwa 6,25 Gew.-%. In einer Liste einsetzbarer thermoplastischer Harze sind auch Polyamide wie Nylon-6 genannt. Die Salzschmelze (ionische Flüssigkeit) wird als Lösungsmedium verwendet, in dem sich die Silan-basierte oberflächenaktive Substanz wirksam mit den Kohlenstoffnanoröhren verbinden kann.

Die JP-A-2005-220316 betrifft elektrisch leitfähige Komponenten für die Verwendung in elektrophotographischen Geräten und deren Herstellung. Die elektrisch leitfähigen Komponenten sind aus einem Matrix-Polymer, einem faserförmigen, elektrisch leitfähigen Füllstoff wie Kohlenstoffnanoröhren sowie einer ionischen Flüssigkeit aufgebaut. Als Matrix-Polymer kommen Kautschuke zum Einsatz.

Aufgabe der vorliegenden Erfindung ist die Bereitstellung von Kohlenstoff-Nanoröhren, Graphene oder Gemische davon enthaltenden Polyamid-Formmassen, die eine verbesserte Leitfähigkeit aufweisen, oder in denen unter Erhalt der Leitfähigkeit der Gehalt an Kunststoff-Nanoröhren, Graphenen oder Gemischen davon vermindert werden kann.

Die Aufgabe wird erfindungsgemäß gelöst durch eine thermoplastische Formmasse, enthaltend, bezogen auf die thermoplastische Formmasse,
a) mindestens ein Polyamid, Copolyamid oder einen Polyamid enthaltenden Polymerblend als Komponente A, wobei das Polyamid eine Viskositätszahl von 90 bis 350 ml/g bestimmt in einer 0,5%igen Lösung in 96 gew.%igen Schwefelsäure bei 25°C gemäß ISO 307 aufweist,
b) 0,1 bis 10 Gew.-% Kohlenstoff-Nanoröhren, Graphene oder Gemische davon als Komponente B,
c) 0,1 bis 3 Gew.-% ionische Flüssigkeiten als Komponente C, wobei die Komponente C 0 bis 30 Gew.% Metallsalz enthält.
wobei die thermoplastische Formmasse keine Polyamid-12-Einheiten aufweist.

Es wurde erfindungsgemäß gefunden, dass eine Kombination geringer Mengen an ionischer Flüssigkeiten mit Kohlenstoff-Nanoröhren, Graphenen oder Gemischen davon zu einer Kombinationswirkung führt, die eine hohe Leitfähigkeit auch bei niedrigen Gehalten an Kohlenstoff-Nanoröhren, Graphenen oder Gemischen davon bewirkt.

Der Anteil der ionischen Flüssigkeiten in der thermoplastischen Formmasse beträgt dabei vorzugsweise 0,1 bis 1,5 Gew.-%, insbesondere 0,3 bis 1,2 Gew.-%.

Der Anteil an Kohlenstoff-Nanoröhren, Graphenen oder Gemischen davon als Komponente B beträgt vorzugsweise 0,1 bis 7 Gew.-%, besonders bevorzugt 0,5 bis 4 Gew.-%, bezogen auf die thermoplastische Formmasse.

### Ionische Flüssigkeit Komponente C

Die Erfindung ist nicht eingeschränkt auf spezielle ionische Flüssigkeiten als Komponente C; es können alle geeigneten ionischen Flüssigkeiten verwendet werden, worunter auch Gemische verschiedener ionischer Flüssigkeiten verstanden werden.

Ionische Flüssigkeiten sind nach der Definition von Wasserscheid und Keim in: Angewandte Chemie 2000, 112, 3926-3945 bei relativ niedrigen Temperaturen schmelzende Salze mit nicht molekularem, ionischem Charakter. Sie sind bereits bei relativ niedrigen Temperaturen flüssig und dabei relativ niedrig viskos. Sie besitzen sehr gute Löslichkeiten für eine große Anzahl organischer, anorganischer und polymerer Substanzen. Darüber hinaus sind sie in der Regel nicht brennbar, nicht korrosiv und haben keinen messbaren Dampfdruck.

Ionische Flüssigkeiten sind Verbindungen, die aus positiven und negativen Ionen gebildet werden, jedoch insgesamt ladungsneutral sind. Die positiven wie auch die negativen Ionen sind überwiegend einwertig, möglich sind jedoch auch multivalente Anionen und/oder Kationen, beispielsweise mit einer bis fünf, bevorzugt mit einer bis vier, weiter bevorzugt mit einer bis drei und ganz besonders bevorzugt mit einer bis zwei elektrischen Ladungen pro Ion. Die Ladungen können sich an verschiedenen lokalisierten oder delokalisierten Bereichen innerhalb eines Moleküls befinden, also betainartig, oder auch wie ein getrenntes Anion und Kation verteilt sein. Bevorzugt sind solche ionischen Flüssigkeiten, die aus mindestens einem Kation und mindestens einem Anion aufgebaut sind.

Ionische Flüssigkeiten haben ein komplexeres Lösungsverhalten im Vergleich zu traditionellen wässrigen und organischen Lösungsmitteln, da ionische Flüssigkeiten Salze sind und keine molekularen nichtionischen Lösungsmittel. Ionische Flüssigkeiten sind vorzugsweise in einem Temperaturbereich von -70 bis 300 °C in der flüssigen Phase vorliegend.

Bevorzugt sind ionische Flüssigkeiten mit möglichst niedrigem Schmelzpunkt, insbesondere unterhalb von 150 °C, weiter bevorzugt unterhalb von 100 °C, besonders bevorzugt unterhalb von 80 °C.

Die als Mittel zur Verbesserung der Leitfähigkeit fungierende ionische Flüssigkeit kann so ausgewählt werden, dass sie weitgehend chemisch inert gegenüber den an der Compoundierung teilnehmenden Stoffen ist.

Die ionischen Flüssigkeiten sind typischerweise aus einem organischen Kation aufgebaut, das häufig durch Alkylierung einer Verbindung erhalten wird, beispielsweise von Imidazolen, Pyrazolen, Thiazolen, Isothiazolen, Azathiazolen, Oxothiazolen, Oxazinen, Oxazolinen, Oxazaborolen, Dithiozolen, Triazolen, Selenozolen, Oxaphospholen, Pyrrolen, Borolen, Furanen, Thiophenen, Phospholen, Pentazolen, Indolen, Indolinen, Oxazolen, Isoxazolen, Isotriazolen, Tetrazölen, Benzofuranen, Dibenzofuranen, Benzothiophenen, Dibenzothiophenen, Thiadiazolen, Pyridinen, Pyrimidinen, Pyrazinen, Pyridazinen, Piperazinen, Piperidinen, Morpholonen, Pyranen, Anolinen, Phthalazinen, Quinazolinen, Quinoxalinen und Kombinationen davon.

Besonders bevorzugt ist in der ionischen Flüssigkeit das Kation der ionischen Flüssigkeit ausgewählt aus der Gruppe, enthaltend quaternäre Ammonium-Kationen, Phosphonium-Kationen, Imidazolium-Kationen H-Pyrazolium-Kationen, Pyridazinium-Ionen, Pyrimidinium-Ionen, Pyrazinium-Ionen, Pyrolidinium-Kationen, Guanidinium-Kationen, 5- bis mindestens 6-gliedrigen Kationen, die mindestens ein Phosphor- oder Schwefelatom enthalten, dem 1,8-Diazabicyclo[5.4.0]undec-7-enium-Kation und dem 1,8-Diazabicyclo[4.3.0]non-5-inium-Kation sowie Oligo- und Polymere, die diese Kationen enthalten.

Der anionische Teil der ionischen Flüssigkeit kann aus anorganischen oder organischen Anionen aufgebaut sein. Typische Beispiele hierfür sind Halogenide, BX₄⁻, PF₆⁻, AsF₆⁻, SbF₆⁻, NO₂⁻, NO₃⁻, SO₄²⁻, Alkylsulfate, BR₄⁻, substituierte oder unsubstituierte Carborane, substituierte oder unsubstituierte Metallocarborane, Phosphate, Phosphite, Polyoxometallate, substituierte oder unsubstituierte Carboxylate, Triflate, Triflimide und nicht koordinierende Anionen. Dabei kann R Wasserstoff, Alkyl, substituiertes Alkyl, Cycloalkyl, substituiertes Cycloalkyl, Heteroalkyl, Heterocycloalkyl, substituiertes Heterocycloalkyl, Aryl, substituiertes Aryl, Heteroaryl, substituiertes Heteroaryl, Alkoxy, Aryloxy, Acyl, Silyl, Boryl, Phosphino, Amino, Thio, Seleno und Kombinationen davon umfassen kann Halogen, insbesondere Fluor bedeuten. Durch Veränderung der Kombination von Kationen und Anionen ist es möglich, die ionische Flüssigkeit mit den gewünschten Lösungseigenschaften für ein spezifisches thermoplastisches Polymer einzustellen.

Das Kation kann beispielsweise einen einzigen fünfgliedrigen Ring aufweisen, der nicht an andere Ringstrukturen gebunden ist. Ein Beispiel hierfür ist ein Imidazoliumkation. In diesem Fall kann das Anion der ionischen Flüssigkeit ein Halogen oder Pseudohalogen sein. Für eine weitere Beschreibung kann auf US-A-2005 0288 484, Absätze [0055] bis [0062] verwiesen werden.

Raumtemperatur-ionische Flüssigkeiten, die erfindungsgemäß eingesetzt werden können, sind beispielsweise in der WO 02/079269 auf den Seiten 13 bis 16 beschrieben. Dort werden als Kationen beispielsweise große, asymmetrische organische Kationen wie N-Alkylpyridinium, Alkylammonium, Alkylphosphonium und N, N'-Dialkylimidazolium angegeben. Bevorzugt weisen die ionischen Flüssigkeiten eine hohe Stabilität auf und haben besonders bevorzugt eine Zersetzungstemperatur oberhalb von 400 °C. Beispielsweise haben Dialkylimidazolium und Alkylpyridinium derartig hohe Zersetzungstemperaturen. Besonders bevorzugt können dabei 1-Alkyl-3-methylimidazoliumsalze eingesetzt werden, wobei beispielsweise PF₆⁻ ein geeignetes Gegenion ist.

Weitere geeignete ionische Flüssigkeiten sind in der prioritätsälteren, nicht vorveröffentlichten PCT/EP2007/060881 beschrieben.

Für weitere Beschreibungen von ionischen Flüssigkeiten kann auf Angew. Chem. 2000, 112, 3926 bis 3945, K. N. Marsh et al., Fluid Phase Equilibria 219 (2004), 93 bis 98 und J. G. Huddleston et al., Green Chemistry 2001, 3, 156 bis 164 wie auch DE-A-102 02 838, WO 2005/019137, WO 20051007657, WO 03/029329, WO 2004/084627, WO 2005/017001 und WO 2005/017252 verwiesen werden. Beispielsweise sind in der WO 2005/007657 Salze von 1,5-Diazabicyclo[4.3.0]non-5-en (DBN) und 1,4-Diazäbicylco[5.4.0]undec-7-en (DBU) beschrieben. In der WO 2004/084627 sind beispielsweise als Kationen cyclische Aminbasen wie Pyridinium, Pyridazinium, Pyrimidinium, Pyrazinium, Imidazolium, Pyrazolium, Oxazolium, 1,2,3- und 1,2,4-Triazolium, Thiazolium, Piperidinium, Pyrrolidinium, Quinolinium und Isoquinolinium beschrieben. Geeignete Gegenionen für 1,8-Diazabicylo[5.4.0]undec-7-enium (DBU) sind beispielsweise Chlorid, Methansulfonat, Formiat, Acetat, Tosylat, Trifluoroacetat, Saccharinat, Hydrogensulfat, Lactathiocyanat, und Trifluormethansulfamat. Das DBU-Ion kann beispielsweise durch C₁₋₁₂-Alkylreste, insbesondere C₄₋₈-Alkylreste substituiert sein. Beispielsweise kann 8-Butyl-DBU oder 8-Octyl-DBU als Kation eingesetzt werden. Weitere geeignete ionische Flüssigkeiten sind in WO 2008/006422, EP-A-2 223 904, WO 2009/101032, WO 2006/048171, JP-A-2009-155436 und JP-A-2005-220316 beschrieben.

Besonders bevorzugt werden erfindungsgemäß in der ionischen Flüssigkeit als Kation gegebenenfalls substituierte Imidazoliumkationen, gegebenenfalls substituierte 1,8-Diazabicyclo[5.4.0]undec-7-eniumkationen oder Gemische davon eingesetzt. Als Substituenten kommen insbesondere Alkylsubstituenten in Frage, beispielsweise C₁₋₁₀-Alkylsubstituenten. Für Imidazoliumionen kommen bevorzugt C₁₋₄-Alkylsubstituenten, insbesondere Ethyl- und Methylsubstituenten in Frage. Besonders bevorzugt wird in diesem Fall Ethylmethylimidazolium (EMIM), Methylmethylimidazolium (MMIM) als Kation eingesetzt. Ferner kann bevorzugt Butylmethylimidazolium (BMIM) als Kation eingesetzt werden. Bei 1,8-Diazabicyclo[5.4.0]undec-7-eniumkationen werden bevorzugt C₃₋₁₀-Alkylsubstituenten, insbesondere C₄₋₈-Alkylsubstituenten eingesetzt. Besonders bevorzugt sind hierbei 8-Butyl-DBU und 8-Octyl-DBU sowie Gemische davon.

Als Anionen für die Imidazoliumsalze können die vorstehend beschriebenen Anionen eingesetzt werden. Bevorzugte Gegenionen sind vorzugsweise ausgewählt aus Halogenid, gegebenenfalls substituiertem C₁₋₄-Carboxylat, Phosphat, C₁₋₄-Alkylphosphat, Di-C₁₋₄-Alkylphosphat. C₁₋₄-Alkylsulfonat, Hydrogensulfat, C₁₋₄-Alkylsulfat, Triflimid, Tetrafluoroborat, Triflat oder Gemischen davon.

Besonders bevorzugt ist die ionische Flüssigkeit Ethylmethylimidazoliumethylsulfat, -triflimid, -tetrafluoroborat, -triflat, -diethylphosphat oder ein Gemisch davon.

Die ionische Flüssigkeit kann auch Wasser in geringeren Anteilen enthalten. Beispielsweise kann der Wassergehalt in der ionischen Flüssigkeit 0 bis 5 Gew.-% betragen. Vorzugsweise ist der Wassergehalt so gering wie möglich.

Die erfindungsgemäße thermoplastische Formmasse kann neben den Komponenten A, B und C auch zusätzlich ein Metallsalz gemischt mit oder gelöst in Komponente C enthalten. Dabei ist das Metallsalz vorzugsweise ein in der ionischen Flüssigkeit lösliches Metallsalz. Durch den Zusatz der Metallsalze kann die Leitfähigkeit nochmal erhöht werden. Geeignete Metallsalze sind beispielsweise in EP-A-2 223 904 beschrieben. Vorzugsweise ist das Metallsalz ausgesucht aus der Gruppe der Alkalimetallsalze der Anionen Bis(perfluoralkylsulfonyl)amid oder Bis(perfluoralkylsulfonyl)imid, Bis(trifluormethylsulfonyl)imid, Alkyl- und Aryltorsylaten, Perfluoralkyltorsylaten, Nitrat, Sulfat, Hydrogensulfat, Alkyl- und Arylsulfonaten, Polyethersulfaten und Polyethersulfonaten, Perfluoralkylsulfaten, Sulfonaten, Alkyl- und Arylsulfonaten, perfluorierten Alkyl- und Arylsulfonaten, Alkyl- und Arylcarboxylaten, Perfluoroalkylcarboxylaten, Perchlorat, Tetrachloraluminat, Saccharinat, Thiocyanat, Isothiocyanat, Dicyanamid, Tetraphenylborat, Tetrakis(pentafluorphenyl)borat, Tetrafluorborat, Hexafluorphosphat, Phosphat und/oder Polyetherphosphat.

Der Anteil an Metallsalz ist in der vorstehenden Mengenangabe für Komponente C nicht enthalten. Bei Mitverwendung eines derartigen Metallsalzes beträgt sein Anteil, bezogen auf die Komponente C je nach Löslichkeit, vorzugsweise 0 bis 30 Gew.-%.

Für eine Kombination von Metallsalzen mit ionischen Flüssigkeiten kann auf die WO 2008/006422, insbesondere Seite 4, Zeilen 6 bis 11, und Seite 16, verwiesen werden.

### Polymer Komponente A

Als Komponente A werden in den erfindungsgemäßen thermoplastischen Formmassen mindestens ein Polyamid, Copolyamid oder ein Polyamid enthaltender Polymerblend eingesetzt.

Die erfindungsgemäß eingesetzten Polyamide werden durch Umsetzung von Ausgangsmonomeren hergestellt, die beispielsweise ausgewählt sind aus Dicarbonsäuren und Diaminen oder Salzen aus den Dicarbonsäuren und Diaminen, aus Aminocarbonsäuren, Aminonitrilen, Lactamen und Gemischen davon. Es kann sich dabei um Ausgangsmonomere von beliebigen Polyamiden handeln, beispielsweise von aliphatischen, teilaromatischen oder aromatischen Polyamiden. Die Polyamide können amorph, kristallin oder teilkristallin sein. Die Polyamide können ferner beliebige geeignete Viskositäten bzw. Molekulargewichte aufweisen. Besonders geeignet sind Polyamide mit aliphatischem teilkristallinen oder teilaromatischen sowie amorphem Aufbau jeglicher Art.

Solche Polyamide weisen im allgemeinen eine Viskositätszahl von 90 bis 350, vorzugsweise 110 bis 240 ml/g auf, bestimmt in einer 0,5 gew.%-igen Lösung in 96 Gew.-%-iger Schwefelsäure bei 25°C gemäß ISO 307.

Halbkristalline oder amorphe Harze mit einem Molekulargewicht (Gewichtsmittelwert) von mindestens 5.000, wie sie z. B. in den amerikanischen Patentschriften 2 071 250, 2 071 251, 2 130 523, 2 130 948, 2 241 322, 2 312 966, 2 512 606 und 3 393 210 beschrieben werden, sind bevorzugt. Beispiele hierfür sind Polyamide, die sich von Lactamen mit 7 bis 11 Ringgliedern ableiten, wie Polycaprolactam und Polycapryllactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien Adipinsäure, Azelainsäure, Sebacinsäure, Dodecandisäure (= Decandicarbonsäure) und Terephthal- und/oder Isophthalsäure als Säuren genannt.

Als Diamine eignen sich besonders Alkandiamine mit 2 bis 12, insbesondere 6 bis 8 Kohlenstoffatomen sowie m-Xylylendiamin, Di-(α- aminophenyl)methan, Di- (4-aminocyclohexyl)-methan, 2,2-Di-(aminophenyl)-propan oder 2,2-Di-(4-aminocyclohexyl)-propan sowie p-Phenylendiamin.

Bevorzugte Polyamide sind Polyhexamethylenadipinsäureamid (PA 66) und Polyhexamethylensebacinsäureamid (PA 610), Polycaprolactam (PA 6) sowie Copolyamide6/66, insbesondere mit einem Anteil von 5 bis 95 Gew.-% an Caprolactam-Einheiten. PA 6, PA 66 und Copolyamide 6/66 sind besonders bevorzugt.

Außerdem seien auch Polyamide erwähnt, die z. B. durch Kondensation von 1,4-Diaminobütan mit Adipinsäure unter erhöhter Temperatur erhältlich sind (Polyamid-4,6). Herstellungsverfahren für Polyamide dieser Struktur sind z. B. in den EP-A 38 094, EP-A 38 582 und EP-A 39 524 beschrieben.

Weitere Beispiele sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Die Herstellung der teilaromatischen Copolyamide mit niedrigem Triamingehalt kann nach den in den EP-A 129 195 und 129 196 beschriebenen Verfahren erfolgen. Für teilaromatische Polyamide kann ferner auf WO 2008/074687 verwiesen werden.

Die nachfolgende nicht abschließende Aufstellung enthält die genannten, so wie weitere Polyamide im Sinne der Erfindung (in Klammern sind die Monomeren angegeben):
PA 26 (Ethylendiamin, Adipinsäure)
PA 210 (Ethylendiamin, Sebacinsäure)
PA 46 (Tetramethylendiamin, Adipinsäure)
PA 66 (Hexamethylendiamin, Adipinsäure)
PA 69 (Hexamethylendiamin,Azelainsäure)
PA 610 (Hexamethylendiamin, Sebacinsäure)
PA 612 (Hexamethylendiamin, Decandicarbonsäure)
PA 613 (Hexamethylendiamin, Undecandicarbonsäure)
PA 1212 (1,12-Dodecandiamin, Decandicarbonsäure)
PA 1313 (1,13-Diaminotridecan, Undecandicarbonsäure)
PA MXD6 (m-Xylylendiamin, Adipinsäure)
PA TMDT (Trimethylhexamethylendiamin, Terephthalsäure)
PA 4 (Pyrrolidon)
PA 6 (ε-Caprolactam)
PA 7 (Ethanolactam)
PA 8 (Capryllactam)
PA 9 (9-Aminononnsäure)
Polyphenylendiaminterephthalamid (p-Phenylendiamin, Terephthalsäure)

Diese Polyamide und ihre Herstellung sind bekannt. Einzelheiten zu ihrer Herstellung findet der Fachmann in Ullmanns Encyklopädie der Technischen Chemie, 4. Auflage, Bd. 19, S. 39-54, Verlag Chemie, Weinmann 1980, sowie Ullmanns Encyclopedia of Industrial Chemistry, Vol. A21, S. 179-206, VCH Verlag, Weinheim 1992, sowie Stoeckhert, Kunststofflexikon, S. 425-428, Hanser Verlag München 1992 (Stichwort "Polyamide" und folgende).

Besonders bevorzugt werden Polyamid-6, Polyamid-66 oder MXD6-Polyamid (Adipinsäure/m-Xylylendiamin) eingesetzt.

Zudem ist es erfindungsgemäß möglich, funktionalisierende Verbindungen in den Polyamiden vorzusehen, die zur Anbindung an Carboxyl- oder Aminogruppen befähigt sind und die z. B. mindestens eine Carboxyl-, Hydroxyl- oder Aminogruppe aufweisen. Dabei handelt es sich vorzugsweise um verzweigend wirkende Monomere, die z. B. mindestens drei Carboxyl-, oder Aminogruppen aufweisen,

Monomere, die zur Anbindung an Carboxyl- oder Aminogruppen befähigt sind, z. B. durch Epoxy-, Hydroxy-, Isocyanato-, Amino- und/oder Carboxylgruppen, und funktionelle Gruppen aufweisen, ausgewählt aus Hydroxyl-, Ether-, Ester-, Amid-, Imin-, Imid-, Halogen-, Cyano- und Nitrogruppen, C-C-Doppel- oder -Dreifachbindungen,
oder um Polymerblöcke, die zur Anbindung an Carboxyl- oder Aminogruppen befähigt sind, beispielsweise um Poly-p-aramidoligomere.

Durch den Einsatz der funktionalisierenden Verbindungen kann das Eigenschaftsspektrum der hergestellten Polyamide in weiten Bereichen frei eingestellt werden.

Beispielsweise können Triacetondiamin-Verbindungen als funktionalisierende Monomere eingesetzt werden. Es handelt sich dabei vorzugsweise um 4-Amino-2,2,6,6-tetramethylpiperidin oder 4-Amino-1-alkyl-2,2,6,6-tetramethylpiperidin, in denen die Alkylgruppe 1 bis 18 C-Atome aufweist oder durch eine Benzylgruppe ersetzt ist. Die Triacetondiamin-Verbindung ist in einer Menge von vorzugsweise 0,03 bis 0,8 mol-%, besonders bevorzugt 0,06 bis 0,4 mol-%, jeweils bezogen auf 1 Mol Säureamid-Gruppen des Polyamids, vorhanden. Für eine weitere Beschreibung kann auf die DE-A-44 13 177 verwiesen werden.

Als weitere funktionalisierende Monomere können auch die üblicherweise als Regler eingesetzten Verbindungen wie Monocarbonsäuren und Dicarbonsäuren verwendet werden. Für eine Beschreibung kann ebenfalls auf die DE-A-44 13 177 verwiesen werden.

Komponente A kann neben einem oder mehreren Polyamiden oder Copolyamiden auch mindestens ein weiteres Blendpolymer enthalten. Dabei beträgt der Anteil des Blendpolymers an Komponente A vorzugsweise 0 bis 60 Gew.-%, besonders bevorzugt 0 bis 50 Gew.-%, insbesondere 0 bis 40 Gew.-%. Beim Vorliegen des Blendpolymers beträgt seine Mindestmenge vorzugsweise 5 Gew.-%, besonders bevorzugt mindestens 10 Gew.-%.

Als Blendpolymer können beispielsweise natürliche oder synthetische Kautschuke, Acrylatkautschuke, Polyester, Polyolefine, Polyurethane oder Gemische davon eingesetzt werden, gegebenenfalls in Kombination mit einem Verträglichkeitsvermittler.

Als einsetzbare synthetische Kautschuke können Ethylen-Propylen-Dien-Kautschuk (EPDM), Styren-Butadien-Kautschuk (SBR), Butadien-Kautschuk (BR), NitrilKautschuk (NBR), Hydrin-Kautschuk (ECO), Acrylat-Kautschuke (ASA) genannt werden. Auch Silikon-Kautschuke, Polyoxyalkylen-Kautschuke und andere Kautschuke sind einsetzbar.

Als thermoplastische Elastomere können thermoplastisches Polyurethan (TPU), Styrol-Butadien-Styrol-Blockcopolymere (SBS), Styrol-Isopren-Styrol-Blockcopolymere (SIS), Styrol-Ethylen-Butylen-Styrol-Blockcopolymere (SEBS) oder Styrol-Ethylen-Propylen-Styrol-Blockcopolymere (SEPS) benannt werden.

Ferner können Harze als Blendpolymere eingesetzt werden, etwa Urethanharze, Acrylharze, Fluorharze, Silikonharze, Imidharze, Amidimidharze, Epoxyharze, Ureaharze, Alkydharze oder Melaminharz.

Als Blendpolymer kommen ferner Ethylencopolymerisate in Betracht, beispielsweise Copolymer aus Ethylen und 1-Octen, 1-Buten oder Propylen, wie sie in der WO 2008/074687 beschrieben sind. Die Molekulargewichte derartiger Ethylen-α-Olefin-Copolymere liegt vorzugsweise im Bereich von 10.000 bis 500.000 g/mol, bevorzugt zwischen 15.000 und 400.000 g/mol (Zahlenmittel des Molekulargewichts). Es können auch reine Polyolefine wie Polyethylen oder Polypopylen eingesetzt werden.

Für geeignete Polyurethane kann auf EP-B-1 984 438, DE-A-10 2006 045 869 und EP-A-2 223 904 verwiesen werden.

Weitere geeignete thermoplastische Harze sind in der JP-A-2009-155436 in Absatz [0028] aufgeführt.

### Carbon-Nanotubes Komponente B

Als Komponente B kommen Kohlenstoff-Nanoröhren, Graphene oder Gemische davon zum Einsatz. Geeignete Kohlenstoff-Nanoröhren und Graphene sind dem Fachmann bekannt. Für eine Beschreibung geeigneter Kohlenstoff-Nanotubes (CNT) kann auf DE-A-102 43 592, insbesondere die Absätze [0025] bis [0027] verwiesen werden, ferner auf EP-A-2 049 597, insbesondere auf Seite 16, Zeilen 11 bis 41, oder auf DE-A-102 59 498, Absätze [0131] bis [0135]. Ferner sind geeignete Carbon Nanotubes beschrieben in WO 2006/026691, Absätze [0069] bis [0074]. Geeignete Kohlenstoff-Nanotubes sind ferner in WO 2009/000408, Seite 2, Zeilen 28 bis Seite 3, Zeile 11, beschrieben.

Im Rahmen der vorliegenden Erfindung versteht man unter Carbon-Nanotubes kohlenstoffhaltige Makromoleküle, in denen der Kohlenstoff (hauptsächlich) Graphitstruktur aufweist und die einzelnen Graphitschichten schlauchförmig angeordnet sind. Nanotubes sowie deren Synthese sind in der Literatur bereits bekannt (beispielsweise J. Hu et al., Acc. Chem. Res. 32 (1999), 435 445). Im Rahmen der vorliegenden Erfindung kann grundsätzlich jegliche Art von Nanotubes eingesetzt werden.

Vorzugsweise beträgt der Durchmesser der einzelnen schlauchförmigen Graphitschichten (Graphitschläuche) 4 bis 20 nm, insbesondere 5 bis 10 nm. Nanotubes lassen sich prinzipiell in sogenannte Single walled nanotubes (SWNTs; "einwändige" Nanotubes) und multiwalled nanotubes (MWNTs; "mehrwändige" Nanotubes) unterscheiden. In den MWNTs sind somit mehrere Graphitschläuche übereinander gestülpt.

Ferner kann die äußere Form der Schläuche variieren, diese kann gleichförmigen Durchmesser innen und außen aufweisen, es sind aber auch knotenförmige Schläuche und wurmähnliche Strukturen (vermicular) herstellbar.

Das Aspektverhältnis (Länge des jeweiligen Graphitschlauches zu dessen Durchmesser) beträgt mindestens > 10, vorzugsweise > 5. Die Nanotubes haben eine Länge von mindestens 10 nm. Im Rahmen der vorliegenden Erfindung werden als Komponente B) MWNTs bevorzugt. Insbesondere weisen die MWNTs ein Aspektverhältnis von ca. 1.000 : 1 sowie eine Durchschnittslänge von ungefähr 10.000 nm auf.

Die spezifische Oberfläche gemäß BET beträgt in der Regel 50 bis 2000 m²/g, vorzugsweise von 200 bis 1200 m²/g. Die bei der katalytischen Herstellung entstehenden Unreinheiten (z. B. Metalloxide) betragen in der Regel gemäß HRTEM von 0,1 bis 12 %, vorzugsweise von 0,2 bis 10 %.

Geeignete Nanotubes können unter der Bezeichnung "multiwall" von der Firma Hyperion Catalysis Int., Cambridge MA (USA) bezogen werden (siehe auch EP 205 556, EP 969 128, EP 270 666, US 6,844,061).

Bei der erfindungsgemäßen Herstellung ist keine Vorbehandlung oder Oberflächenmodifizierung der Kohlenstoff-Nanoröhren notwendig. Insbesondere erfolgt gemäß einer Ausführungsform der Erfindung keine Oberflächenmodifizierung der Kohlenstoff-Nanoröhren durch Silane oder Silikonöle, insbesondere nicht durch Silanhaftvermittler oder Silikonöle, wie sie in JP-A-2009-155436 beschrieben sind.

Geeignete Graphene sind beispielsweise beschrieben in Macromolecules 2010, 43, Seiten 6515 bis 6530.

Die erfindungsgemäßen thermoplastischen Formmassen können ferner weitere Zusatzstoffe wie weitere Füllstoffe, z. B. Glasfasern, Stabilisatoren, Oxidationsverzögerer; Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten. Typischerweise liegen diese weiteren Zusatzstoffe in Mengen von 0 bis 50 Gew.-%, vorzugsweise 0 bis 35 Gew.-% vor. Für eine nähere Beschreibung möglicher Zusatzstoffe kann auf die WO 2008/074687, Seiten 31 bis 37 verwiesen werden.

Die Herstellung der erfindungsgemäßen thermoplastischen Formmassen erfolgt durch Extrusionsverfahren bei einer Temperatur vorzugsweise im Bereich von 170 bis 350 °C, besonders bevorzugt 200 bis 300 °C.

Es kann beispielsweise ein wie in DE-A-10 2007 029 008 beschriebenes Verfahren zum Einsatz kommen. Ferner kann für die Herstellung auf WO 2009/000408 verwiesen werden.

Die Herstellung erfolgt vorzugsweise in einem gleichläufigen Doppelschneckenextruder, in dem die Komponenten B und C in Komponente A eingebracht werden.

Die Komponente B kann als Pulver oder in Form eines Masterbatch in thermoplastische Formmasse eingebracht werden. Die Zuführung der ionischen Flüssigkeit der Komponente C kann unabhängig von der Zuführung des leitfähigen Füllstoffs der Komponente B erfolgen, beispielsweise im "holt feed" des Extruders. Alternativ kann ein Komponente C enthaltender Masterbatch eingesetzt werden.

Die Weiterverarbeitung der thermoplastischen Formmasse kann nach bekannten Verfahren erfolgen, beispielsweise durch Spritzgießen oder Formpressen.

Das erfindungsgemäße Verfahren erlaubt die Herstellung von mit den Kohlenstoff-Füllstoffen der Komponente B gefüllten thermoplastischen Formmassen mit geringem Energieaufwand bei guten Dispersionsgraden.

Durch die erfindungsgemäße Herstellung werden die thermoplastischen Formmassen bzw. daraus hergestellte Formkörper antistatisch oder leitfähig. Unter "antistatisch" werden Volumenwiderstände von 10⁹ bis 10⁶ Ohm cm verstanden. Unter "leitfähig" werden Volumenwiderstände von weniger als 10⁶ Ohm cm verstanden.

Ohne an diese Theorie gebunden zu sein, können leitfähige thermoplastische Formmassen insbesondere dann erhalten werden, wenn die Konzentration der Komponente B in der Nähe der Perkolationskonzentration liegt. Bei dieser Konzentration wird vorzugsweise ein Netzwerk aus Kohlenstoff-Nanoröhren (oder Graphenen) innerhalb der Polymermatrix ausgebildet. Dies bedeutet, dass die einzelnen Kohlenstoff-Nanoröhren oder Graphenteilchen in der Polymermatrix miteinander in Kontakt stehen, so dass sie einen kontinuierlichen Pfad durch das Material bilden. Aufgrund des Zusatzes von ionischer Flüssigkeit kann die Leitfähigkeit dabei nochmals signifikant erhöht werden.

Die erfindungsgemäßen thermoplastischen Formmassen werden insbesondere zur Herstellung von leitfähigen Formkörpern eingesetzt.

Die Erfindung betrifft auch Formkörper aus der vorstehend beschriebenen thermoplastischen Formmasse.

Die Erfindung wird durch die nachstehenden Beispiele näher erläutert.

### Beispiele:

Zur Herstellung der thermoplastischen Formmasse wurden folgende Einsatzstoffe verwendet:

### Thermoplastische Matrix:

A1: Polyamid-6 mit einer Viskositätszahl (VN) von 150 ml/g
A2: Polyethylen (LDPE) mit einer MFR von 0,75 g/10 min

### Leitfähiger Füllstoff:

B: Kohlenstoff-Nanoröhren Nanocyl^{®} NC7000 in Form eines 15 gew.-%igen Masterbatches in Polyamid-6

Die Kohlenstoff-Nanoröhren wiesen eine Reinheit von 90 % auf, einen durchschnittlichen Durchmesser von 9,5 nm und eine durchschnittliche Länge von 1,5 µm. Die Oberfläche nach BET betrug 250 bis 300 m²/g.

### Ionische Flüssigkeiten:

Die eingesetzten ionischen Flüssigkeiten waren:
C1: 1-Ethyl-3-Methyl-Imidazoliumtriflimid (CAS-Nr. 174899-82-2)
C2: 1-Ethyl-3-Methyl-Imidazoliumethylsulfat (CAS-Nr. 342573-75-5)
C3: 1-Ethyl-3-Methyl-Imidazoliumtetrafluorborat (CAS-Nr. 143314-16-3)
C4: 1-Ethyl-3-Methyl-Imidazoliumtriflat (CAS-Nr. 145022-44-2)

### Charakterisierungsmethoden:

Die Viskositätszahl des Polyamids VN wurde nach ISO 307 in einer 0,5 gew.%igen Lösung in 96 gew.-%iger Schwefelsäure bei 25 °C bestimmt.

Die MFR von Polyethylen wurde nach ISO 1133 bei 190 °C unter einer Last von 2,16 kg bestimmt.

Die elektrische Leitfähigkeit wurde als Volumenleitfähigkeit unter Verwendung einer 4-Punktmessapparatur durchgeführt. Für jede Platte wurde die Messung an fünf Proben der Dimensionen 77 x 12 x 4 mm³ durchgeführt, die aus gehärteten Platten ausgesägt wurden. Um einen guten Kontakt zwischen Probe und Elektroden zu erreichen, wurden vier Silberelektroden direkt auf die Probe gemalt unter Verwendung einer leitfähigen Silberpaste (Leitsilber 200 von Hans Wohlbring GmbH). Als Stromquelle wurde 225 Current Source, als Spannungsmessgerät 617 Programmable Electrometer und als Strommessgerät 1000 Multimeter, jeweils Keithley Instruments, eingesetzt.

Die Herstellung der Kohlenstoff-gefüllten Formmassen erfolgte auf einem Extruder ZSK18 von Coperion mit einem Schraubendurchmesser von 18 mm. Der Extruder wies elf Zonen auf, wobei das Polymer in den Zonen 0 und 1 kalt eingefüllt wurde. Die Zonen 2 und 3 dienten dem Aufschmelzen und Transportieren. In Zone 4 wurde die ionische Flüssigkeit zudosiert. Die nachfolgenden Zonen 5 und 6 dienten der Dispergierung, wobei ein Teil der Zone 6 zusammen mit Zone 7 auch der Homogenisierung diente. In den Zonen 8 und 9 wurde eine Redispergierung durchgeführt. Es folgte eine Zone 10 zur Entgasung und Zone 11 zum Austrag.

Der Eintrag der ionischen Flüssigkeit in Zone 4 erfolgte als Hot Feed unter Verwendung einer Getriebepumpe. Der Extruderdurchsatz wurde auf 5 kg/h eingestellt, und die Schraubengeschwindigkeit wurde mit 400 U/min konstant gehalten. Die Estrusionstemperatur betrug 260 °C. Die Zusammensetzung der Formmassen ist in der nachfolgenden Tabelle 1 dargestellt. Die Produkte wurden granuliert und durch Spritzgießen weiterverarbeitet. Das Spritzgießen erfolgte auf einer Arburg 420T bei einer Schmelztemperatur von 260 °C und einer Formtemperatur von 80 °C.

Die Zusammensetzungen und elektrischen Eigenschaften sind in der nachfolgenden Tabelle 1 wiedergegeben.

**Tabelle 1**

| | | | | | | | | | Volumenwiderstand |
|---|---|---|---|---|---|---|---|---|---|
| | | Gew.-% | | Gew.-% | | Gew.-% | | Gew.-% | [Ohm*m] |
| Ref. 1 | A1 | 95 | - | - | B | 5 | - | - | 3,14E + 10 |
| Ref. 2 | A1 | 97 | - | - | B | 3 | - | - | 2,70E + 12 |
| Ref. 3 | A1 | 98 | - | - | B | 2 | - | - | 1,50E + 12 |
| Ref. 4 | A1 | 67 | A2 | 30 | B | 3 | - | - | 1,88E + 07 |
| Ref. 5 | A1 | 100 | - | - | - | - | - | - | 8,81E + 13 |
| Ref. 6 | A1 | 97 | - | - | - | - | C1 | 3 | 1,24E + 10 |
| Ref. 7 | A1 | 97 | - | - | - | - | C2 | 3 | 2,72E + 09 |
| Ref. 8 | A1 | 97 | - | - | - | - | C3 | 3 | 1,48E + 09 |
| Ref. 9 | A1 | 97 | - | - | - | - | C4 | 3 | 4,26E + 09 |
| Ex. 1 | A1 | 96 | - | - | B | 3 | C1 | 1 | 1,16E + 06 |
| Ex. 2 | A1 | 96 | - | - | B | 3 | C3 | 1 | 2,53E + 05 |
| Ex. 3 | A1 | 96 | - | - | B | 3 | C4 | 1 | 6,02E + 05 |
| Ex. 4 | A1 | 96 . | - | - | B | 3 | C2 | 1 | 1,60E + 06 |
| Ex. 5 | A1 | 96,5 | - | - | B | 3 | C2 | 0,5 | 3,02E + 08 |
| Ex. 6 | A1 | 97 | - | - | B | 2 | C2 | 1 | 1,64E + 10 |
| Ex. 7 | A1 | 97,5 | - | - | B | 2 | C2 | 0,5 | 1,45E + 11 |
| Ex. 8 | A1 | 66 | A2 | 30 | B | 3 | C2 | 1 | 2,41E + 04 |

Referenzbeispiel 2 dient zum Vergleich mit Beispielen 1 bis 5, die den gleichen Gehalt an Kohlenstoff-Nanoröhren aufweisen. Der Volumenwiderstand ist durch Zusatz der ionischen Flüssigkeit stark herabgesetzt.

Referenzbeispiel 3 dient zum Vergleich mit Beispielen 6 und 7. Durch Zusatz der ionischen Flüssigkeit ist der Volumenwiderstand ebenfalls stark herabgesetzt.

Referenzbeispiel 4 dient zum Vergleich mit Beispiel 8. Der Volumenwiderstand wird um fast den Faktor 1000 herabgesetzt.

Referenzbeispiel 5 gibt den Volumenwiderstand für ein reines Polyamid an. Referenzbeispiele 6 bis 9 geben Vergleichsformmassen an, die zwar eine ionische Flüssigkeit in einer Menge von 3 Gew.-% enthalten, jedoch keine Kohlenstoff-Nanoröhren. Der Volumenwiderstand ist jeweils signifikant höher als der Volumenwiderstand der entsprechenden erfindungsgemäßen Formmasse, die dieselbe ionische Flüssigkeit in deutlich geringerer Menge enthält, dafür aber Kohlenstoff-Nanoröhren enthält.

## Patentansprüche

1. Thermoplastische Formmasse, enthaltend, bezogen auf die thermoplastische Formmasse,
a) mindestens ein Polyamid, Copolyamid oder einen Polyamid enthaltenden Polymerblend als Komponente A, wobei das Polyamid eine Viskositätszahl von 90 bis 350ml/g bestimmt in einer 0,5 gew.%igen Lösung in 96 gew.%iger Schwefelsäure bei 25°C gemäß ISO 307 aufweist.
b) 0,1 bis 10 Gew.-% Kohlenstoff-Nanoröhren, Graphene oder Gemische davon als Komponente B,
c) 0,1 bis 3 Gew.-% ionische Flüssigkeiten als Komponente C, wobei die Komponente C 0 bis 30 Gew.% Metallsalz enthält,
wobei die thermoplastische Formmasse keine Polyamid-12-Einheiten aufweist.

2. Thermoplastische Formmasse nach Anspruch 1, **dadurch gekennzeichnet, dass** Komponente B in der thermoplastischen Formmasse in einer Menge von 0,1 bis 7 Gew.-%, bezogen auf die thermoplastische Formmasse, enthalten ist.

3. Thermoplastische Formmasse nach Anspruch 1 oder 2, **dadurch gekennzeichnet, dass** Komponente C in der thermoplastischen Formmasse in einer Menge von 0,1 bis 1,5 Gew.-%, bezogen auf die thermoplastische Forminasse, enthalten ist.

4. Thermoplastische Formmasse nach einem der Ansprüche 1 bis 3, **dadurch gekennzeichnet, dass** die Polyamide in Komponente A ausgewählt sind aus der nachfolgenden Liste, wobei die Ausgangsmonomere in Klammern angegeben sind
PA 26 (Ethylendiamin, Adipinsäure)
PA 210 (Ethylendiamin, Sebacinsäure)
PA 46 (Tetramethylendiamin, Adipinsäure)
PA 66 (Hexamethylendiamin, Adipinsäure)
PA 69 (Hexamethylendiamin,Azelainsäure)
PA 610 (Hexamethylendiamin, Sebacinsäure)
PA 612 (Hexamethylendiamin, Decandicarbonsäure)
PA 613 (Hexamethylendiamin, Undecandicarbonsäure)
PA 1212 (1,12-Dodecandiamin, Decandicarbonsäure)
PA 1313 (1,13-Diaminotridecan, Undecandicarbonsäure)
PA MXD6 (m-Xylylendiamin, Adipinsäure)
PA TMDT (Trimethylhexamethylendiamin, Terephthalsäure)
PA 4 (Pyrrolidon)
PA 6 (ε-Caprolactam)
PA 7 (Ethanolactam)
PA 8 (Capryllactam)
PA 9 (9-Aminononansäure)
Poly(p-phenylendiaminterephthalamid) (Phenylendiamin, Terephthalsäure)
oder Gemischen oder Copolymeren davon.

5. Thermoplastische Formmasse nach einem der Ansprüche 1 bis 4, **dadurch gekennzeichnet, dass** Komponente A als Blendpolymer natürliche oder synthetische Kautschuke, Acrylat-Kautschuke, Polyester, Polyolefine, Polyurethane oder Gemische davon enthält, gegebenenfalls in Kombination mit einem Verträglichkeitsvermittler.

6. Thermoplastische Formmasse nach einem der Ansprüche 1 bis 5, **dadurch gekennzeichnet, dass** in Komponente C das Kation der ionischen Flüssigkeit ausgewählt ist aus der Gruppe, enthaltend quaternäre Ammonium-Kationen, Phosphonium-Kationen, Imidazolium-Kationen H-Pyrazolium-Kationen, Pyridazinium-Ionen, Pyrimidinium-Ionen, Pyrazinium-Ionen, Pyrolidinium-Kationen, Guanidinium-Kationen, 5- bis mindestens 6-gliedrigen Kationen, die mindestens ein Phosphor- oder Schwefelatom enthalten, dem 1,8-Diazabicyclo[5.4.0]undec-7-enium-Kation und dem 1,8-Diazabicyclo[4.3.0]non-5-inium-Kation sowie Oligo- und Prolymeren, die diese Kationen enthalten.

7. Thermoplastische Formmasse nach einem der Ansprüche 1 bis 6, **dadurch gekennzeichnet, dass dadurch gekennzeichnet, dass** in der ionischen Flüssigkeit das Anion ausgewählt ist aus Halogenid, gegebenenfalls substituiertem C₁₋₄-Carboxylat, Phosphat, C₁₋₄-Alkylphosphat, Di-C₁₋₄-alkylphosphat, C₁₋₄-Alkylsulfat, C₁₋₄-Alkylsulfonat, Hydrogensulfat, Triflimid, Tetrafluoroborat, Triflat oder Gemischen davon.

8. Verfahren zur Herstellung von thermoplastischen Formmassen nach einem der Ansprüche 1 bis 8, **dadurch gekennzeichnet, dass** die Komponenten B und C in Komponente A in einem gleichläufigen Doppelschneckenextruder eingebracht werden.

9. Verfahren nach Anspruch 8, **dadurch gekennzeichnet, dass** die Extrusion bei einer Temperatur im Bereich von 170 bis 350 °C durchgeführt wird.

10. Verwendung einer thermoplastischen Formmasse nach einem der Ansprüche 1 bis 7 zur Herstellung von leitfähigen Formkörpern.

11. Formkörper aus einer thermoplastischen Formmasse nach einem der Ansprüche 1 bis 7.

## Claims

1. A thermoplastic molding composition comprising, based on the thermoplastic molding composition,
a) at least one polyamide, copolyamide or a polyamide-comprising polymer blend as component A, where the polyamide has a viscosity number of from 90 to 350 ml/g determined in a 0.5% strength by weight solution in 96% strength by weight sulfuric acid at 25°C in accordance with ISO 307,
b) from 0.1 to 10% by weight of carbon nanotubes, graphenes or mixtures thereof as component B,
c) from 0.1 to 3% by weight of ionic liquids as component C, wherein the component C comprises from 0 to 30% by weight of metal salt,
and the thermoplastic molding composition does not comprise any polyamide-12 units.

2. The thermoplastic molding composition according to claim 1, wherein the thermoplastic molding composition comprises component B in an amount of from 0.1 to 7% by weight, based on the thermoplastic molding composition.

3. The thermoplastic molding composition according to claim 1 or 2, wherein the thermoplastic molding composition comprises component C in an amount of from 0.1 to 1.5% by weight, based on the thermoplastic molding composition.

4. The thermoplastic molding composition according to any of claims 1 to 3, wherein the polyamides in component A are selected from the following list, with the starting monomers being indicated in parentheses,
PA 26 (ethylenediamine, adipic acid)
PA 210 (ethylenediamine, sebacic acid)
PA 46 (tetramethylenediamine, adipic acid)
PA 66 (hexamethylenediamine, adipic acid)
PA 69 (hexamethylenediamine, azelaic acid)
PA 610 (hexamethylenediamine, sebacic acid)
PA 612 (hexamethylenediamine, decanedicarboxylic acid)
PA 613 (hexamethylenediamine, undecanedicarboxylic acid)
PA 1212 (1,12-dodecanediamine, decanedicarboxylic acid)
PA 1313 (1,13-diaminotridecane, undecanedicarboxylic acid)
PA MXD6 (m-xylylenediamine, adipic acid)
PA TMDT (trimethylhexamethylenediamine, terephthalic acid)
PA 4 (pyrrolidone)
PA 6 (ε-caprolactam)
PA 7 (ethanolactam)
PA 8 (capryllactam)
PA 9 (9-aminononanoic acid)
poly(p-phenylenediamine terephthalamide) (phenylenediamine, terephthalic acid)
and mixtures and copolymers thereof.

5. The thermoplastic molding composition according to any of claims 1 to 4, wherein component A comprises natural or synthetic rubbers, acrylic rubbers, polyesters, polyolefins, polyurethanes or mixtures thereof as blend polymer, optionally in combination with a compatibilizer.

6. The thermoplastic molding composition according to any of claims 1 to 5, wherein the cation of the ionic liquid in component C is selected from the group consisting of quaternary ammonium cations, phosphonium cations, imidazolium cations, H-pyrazolium cations, pyridazinium ions, pyrimidinium ions, pyrazinium ions, pyrrolidinium cations, guanidinium cations, 5- to at least 6-membered cations comprising at least one phosphorus or sulfur atom, the 1,8-diazabicyclo[5.4.0]undec-7-enium cation and the 1,8-diazabicyclo[4.3.0]non-5-inium cation and also oligomers and polymers comprising these cations.

7. The thermoplastic molding composition according to any of claims 1 to 6, wherein the anion in the ionic liquid is selected from among halide, optionally substituted C₁₋₄-carboxylate, phosphate, C₁₋₄-alkylphosphate, di-C₁₋₄-alkylphosphate, C₁₋₄-alkylsulfate, C₁₋₄-alkylsulfonate, hydrogensulfate, triflimide, tetrafluoroborate, triflate and mixtures thereof.

8. A process for producing thermoplastic molding compositions according to any of claims 1 to 7, wherein the components B and C are introduced into component A in a corotating twin-screw extruder.

9. The process according to claim 8, wherein extrusion is carried out at a temperature in the range from 170 to 350°C.

10. The use of a thermoplastic molding composition according to any of claims 1 to 7 for producing conductive moldings.

11. A molding composed of a thermoplastic molding composition according to any of claims 1 to 7.

## Revendications

1. Matière à mouler thermoplastique, contenant, par rapport à la matière à mouler thermoplastique,
a) au moins un polyamide, un copolyamide ou un mélange de polymères contenant un polyamide, en tant que composant A, le polyamide présentant un indice de viscosité de 90 à 350 ml/g, déterminé dans une solution à 0,5 % en poids dans de l'acide sulfurique à 96 % en poids à 25 °C selon ISO 307.
b) 0,1 à 10 % en poids de nanotubes de carbone, de graphènes ou de mélanges de ceux-ci, en tant que composant B,
c) 0,1 à 3 % en poids de liquides ioniques en tant que composant C, le composant C contenant 0 à 30 % en poids de sel métallique,
la matière à mouler thermoplastique ne contenant pas d'unités polyamide 12

2. Matière à mouler thermoplastique selon la revendication 1, **caractérisée en ce que** le composant B est contenu dans la matière à mouler thermoplastique en une quantité de 0,1 à 7 % en poids, par rapport à la matière à mouler thermoplastique.

3. Matière à mouler thermoplastique selon la revendication 1 ou 2, **caractérisée en ce que** le composant C est contenu dans la matière à mouler thermoplastique en une quantité de 0,1 à 1,5 % en poids, par rapport à la matière à mouler thermoplastique.

4. Matière à mouler thermoplastique selon l'une quelconque des revendications 1 à 3, **caractérisée en ce que** les polyamides dans le composant A sont choisis dans la liste suivante, les monomères de départ étant indiqués entre parenthèses
PA 26 (éthylènediamine, acide adipique)
PA 210 (éthylènediamine, acide sébacique)
PA 46 (tétraméthylènediamine, acide adipique)
PA 66 (hexaméthylènediamine, acide adipique)
PA 69 (hexaméthylènediamine, acide azélaïque)
PA 610 (hexaméthylènediamine, acide sébacique),
PA 612 (hexaméthylènediamine, acide décane-dicarboxylique)
PA 613 (hexaméthylènediamine, acide undécane-dicarboxylique)
PA 1212 (1,12-dodécanediamine, acide décane-dicarboxylique)
PA 1313 (1,13-diaminotridécane, acide undécane-dicarboxylique)
PA MXD6 (m-xylylènediamine, acide adipique)
PA TMDT (triméthylhexaméthylènediamine, acide téréphtalique
PA 4 (pyrrolidone)
PA 6 (e-caprolactame)
PA 7 (éthanolactame)
PA 8 (capryllactame)
PA 9 (acide 9-aminononanoïque)
poly(p-phénylènediaminetéréphtalamide) (phénylène-diamine, acide téréphtalique)
ou des mélanges ou copolymères de ceux-ci.

5. Matière à mouler thermoplastique selon l'une quelconque des revendications 1 à 4, **caractérisée en ce que** le composant A contient comme polymère de mélange des caoutchoucs naturels ou synthétiques, des caoutchoucs acrylate, des polyesters, des polyoléfines, de polyuréthanes ou des mélanges de ceux-ci, éventuellement en association avec un promoteur de compatibilité.

6. Matière à mouler thermoplastique selon l'une quelconque des revendications 1 à 5, **caractérisée en ce que** dans le composant C le cation du liquide ionique est choisi dans le groupe contenant des cations ammonium quaternaire, des cations phosphonium, des cations imidazolium, des cations H-pyrazolium, des ions pyridazinium, des ions pyrimidinium, des ions pyrazinium, des cations pyrrolidinium, des cations guanidinium, des cations à 5 à au moins 6 chaînons, qui contiennent au moins un atome de phosphore ou de soufre, le cation 1,8-diazabicyclo[5.4.0]undéc-7-énium et le cation 1,8-diazabicyclo[4.3.0]non-5-inium ainsi que des oligomères et polymères qui contiennent ces cations.

7. Matière à mouler thermoplastique selon l'une quelconque des revendications 1 à 6, **caractérisée en ce que** dans le liquide ionique l'anion est choisi parmi un halogénure, carboxylate en C₁-C₄ éventuellement substitué, phosphate, alkyl(C₁-C₄)phosphate, dialkyl (C₁-C₄)phosphate, alkyl (C₁-C₄) sulfate, alkyl(C₁-C₄)sulfonate, hydrogénosulfate, triflimide, tétrafluoroborate, triflate ou des mélanges de ceux-ci.

8. Procédés pour la production de matières à mouler thermoplastiques selon l'une quelconque des revendications 1 à 7, **caractérisé en ce que** dans une extrudeuse double vis à vis tournant dans le même sens on introduit les composants B et C dans le composant A.

9. Procédé selon la revendication 8, **caractérisé en ce qu'**on effectue l'extrusion à une température dans la plage de 170 à 350 °C.

10. Utilisation d'une matière à mouler thermoplastique selon l'une quelconque des revendications 1 à 7 pour la production de corps moulés conducteurs.

11. Corps moulé à base d'une matière à mouler thermoplastique selon l'une quelconque des revendications 1 à 7.
